# FASCICULE DE BREVET EUROPEEN

(11) **EP 3 008 397 B1**
(45) Date de publication et mention de la délivrance du brevet: **02.09.2020**
(21) Numéro de dépôt: 14747848.1
(22) Date de dépôt: 09.06.2014
(51) Int. Cl.: F24H 7/06, C09K 5/06, F24H 9/20, F28D 20/02

(54) **APPAREIL DE CHAUFFAGE COMPRENANT UN MATERIAU A CHANGEMENT DE PHASE**
HEIZVORRICHTUNG MIT EINEM PHASENVERÄNDERLICHEN MATERIAL
HEATING DEVICE COMPRISING A PHASE CHANGE MATERIAL

(30) Priorité: 07.06.2013 FR 1355276
(43) Date de publication de la demande: 20.04.2016
(73) Titulaire: Société Muller & Cie, 75018 Paris (FR)
(72) Inventeur: LEBLANC, Alexandre, F-51170 Fismes (FR); MORARD, Jean-Louis, F-75018 Paris (FR)
(74) Mandataire: Lavoix
(86) Numéro de dépôt international: PCT/EP2014/061944
(87) Numéro de publication internationale: WO 2014/195512

(56) Documents cités:
- WO-A1-95/01542
- FR-A- 1 576 769
- GB-A- 2 272 969
- GB-A- 2 495 938

## Description

La présente invention se rapporte à un appareil de chauffage comprenant un matériau à changement de phase. Le domaine de l'invention est le chauffage domestique.

Il est connu de l'art antérieur des appareils de chauffage électriques comprenant un bâti comportant une face arrière fixé à la paroi verticale d'une pièce, et une enveloppe comprenant un élément rayonnant muni d'une façade rayonnante, chauffé par une face arrière au moyen d'un élément chauffant comme par exemple un câble chauffant ou une résistance sérigraphiée sur un film.

En cours de fonctionnement, ces appareils ont une enveloppe qui peut atteindre des températures de surface élevées, et notamment des températures qui présentent pour un utilisateur des risques des brûlures. Ces appareils de chauffage présentent d'autant plus de danger que la partie inférieure de l'enveloppe est facilement accessible par de très jeunes enfants.

Il existe dans l'art antérieur des solutions connues pour garantir une température maximale en surface de l'enveloppe de ces appareils, inférieure à une valeur limite. Il est par exemple connu de concevoir des appareils de chauffage avec une puissance maximale moindre ou de les munir de dispositifs électromécaniques capables de dégrader leur puissance maximale à une puissance moindre, de sorte à obtenir une faible température en surface de l'enveloppe.

Cependant, ces solutions ne sont pas satisfaisantes, dans la mesure où l'une suppose la conception d'appareils de chauffage spécialement pour cette utilisation, et l'autre présente un risque pour l'utilisateur, en cas de dysfonctionnement des dispositifs électroniques.

Il est classique que l'alimentation électrique de ces appareils de chauffage soit basée sur l'utilisation de thyristors commandés par des dispositifs de régulation. Ces thyristors fonctionnent comme des interrupteurs rapides, dont les cycles d'ouverture et de fermeture commandent l'alimentation électrique de l'élément chauffant.

Or, les cycles d'ouverture et de fermeture des thyristors peuvent se faire de nombreuses fois par minute, ce qui engendre une surchauffe importante des thyristors, susceptible de les détériorer. En conséquence, les thyristors nécessitent ensuite d'être refroidis. Un tel problème se présente notamment lorsque l'appareil de chauffage se stabilise à une température.

Il est connu de refroidir les thyristors par conduction thermique au moyen d'un dissipateur, puis par convection avec l'air circulant autour des thyristors à l'intérieur de l'appareil de chauffage. Il est également connu de plonger les thyristors dans un liquide qui s'évapore à leur contact, puis se condense au contact d'une paroi froide disposée à distance des thyristors. L'énergie accumulée par les thyristors peut ainsi être évacuée.

Cependant, ces solutions présentent plusieurs inconvénients. L'utilisation d'un dissipateur ne permet par exemple pas de refroidir suffisamment les thyristors, et le dissipateur a tendance à s'encrasser par la poussière, ce qui diminue son efficacité. L'utilisation d'un fluide pour refroidir les thyristors présente l'inconvénient d'être particulièrement onéreuse et polluante, et de nécessiter la mise en place d'un système étanche complexe.

Le développement des appareils de chauffage électriques tend aujourd'hui à améliorer le confort des utilisateurs. Les concepteurs cherchent notamment à obtenir des appareils de chauffage montant rapidement, mais descendant très lentement en température.

Plusieurs solutions existent dans l'art antérieur. Il est par exemple connu d'utiliser un élément à forte inertie thermique à l'arrière de l'appareil, en plus d'un élément rayonnant présentant une faible inertie thermique. Ainsi, l'élément à forte inertie thermique monte et descend très lentement en température, tandis que l'élément rayonnant monte et descend très rapidement en température. Cependant, cette solution présente l'inconvénient d'avoir une façade rayonnante qui devient froide dès lors que l'élément rayonnant n'est plus chauffé. Une autre solution consiste à utiliser un matériau inertiel inerte pour l'élément rayonnant, comme de la pierre de lave ou du verre, dimensionné pour avoir une inertie thermique moyenne. Cependant, cette solution n'est qu'un compromis entre inertie thermique forte et faible, et ne permet pas d'obtenir un appareil de chauffage montant rapidement mais descendant très lentement en température.

La présente invention a pour objet de résoudre un ou plusieurs de ces problèmes techniques, en palliant les inconvénients de l'art antérieur.

Plus précisément, la présente invention a pour objet un appareil de chauffage électrique comprenant les caractéristiques de la revendication 1, en particulier:
- un bâti muni d'une enveloppe comportant un matériau à changement de phase et d'une face arrière apte à être fixée à une paroi sensiblement verticale, l'enveloppe et la face arrière délimitant un volume interne du bâti ;
- un élément chauffant disposé dans le volume interne du bâti.

On entend par matériau à changement de phase, un matériau capable d'accumuler de l'énergie en ayant une température sensiblement constante, en changeant d'état physique.

Selon l'invention, l'enveloppe comporte un élément rayonnant muni d'une façade rayonnante, chauffé par l'élément chauffant, le matériau à changement de phase étant disposé dans l'élément rayonnant.

Selon un mode de réalisation de, une température T_{ϕ} de changement de phase du matériau à changement de phase est légèrement supérieure à une température Tₘₐₓ maximale autorisée pour l'enveloppe.

Un tel appareil de chauffage présente l'avantage, en cas de dysfonctionnement de l'appareil, de retarder la montée en température de l'enveloppe, de sorte à limiter les risques de brûlures pour un utilisateur.

Selon un mode de réalisation de, une température T_{ϕA} de changement de phase du matériau à changement de phase est sensiblement égale à une température T_{vA} voulue de la façade rayonnante.

Un tel appareil de chauffage est particulièrement avantageux, lorsque le chauffage de l'élément rayonnant est régulé par des thyristors. Un tel appareil permet en effet d'avoir un actionnement moins fréquent des thyristors, limitant ainsi leur échauffement.

Selon ce mode de réalisation, l'élément rayonnant peut avantageusement comporter un deuxième matériau à changement de phase dont une température T_{ϕ} de changement de phase est légèrement supérieure à une température Tₘₐₓ maximale autorisée pour l'enveloppe.

Selon l'invention, une température T_{ϕB} de changement de phase du matériau à changement de phase est légèrement inférieure à une température T_{vB} voulue de la façade rayonnante.

Un tel appareil de chauffage présente l'avantage de monter rapidement, mais de descendre lentement en température, améliorant ainsi le confort d'un utilisateur.

Selon un mode de réalisation de l'invention, l'élément rayonnant peut avantageusement comporter un deuxième matériau à changement de phase dont une température T_{ϕ} de changement de phase est légèrement supérieure à une température Tₘₐₓ maximale autorisée pour l'enveloppe, et/ou un troisième matériau à changement de phase dont une température T_{ϕA} de changement de phase est sensiblement égale à une température T_{vA} voulue de la façade rayonnante.

Selon l'invention, l'élément rayonnant forme un conteneur hermétique comprenant plusieurs compartiments à l'intérieur desquels est disposé le ou les matériaux à changement de phase, les compartiments étant ménagés de sorte à former au moins un canal reliant une face arrière de l'élément rayonnant à la façade rayonnante. Selon une variante, les compartiments sont en outre ménagés de sorte à former au moins un canal disposé sensiblement parallèlement à la façade rayonnante.

Un tel appareil de chauffage présente l'avantage d'assurer une bonne conductivité thermique de l'élément rayonnant, depuis sa face arrière vers la façade rayonnante.

La présente invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue schématique de profil, en coupe, d'un appareil de chauffage selon un mode de réalisation ;
- Figure 2 : une évolution de la température d'un matériau à changement de phase en fonction de l'énergie reçue ;
- Figure 3 : une vue schématique de profil, en coupe, d'un appareil de chauffage selon un autre mode de réalisation que celui présenté à la figure 1 ;
- Figure 4 : une évolution de la température en façade d'un appareil de chauffage en fonction du temps, selon un art antérieur ;
- Figure 5 : une vue schématique de profil, en coupe, d'un appareil de chauffage selon une variante du mode de réalisation présenté à la figure 3 ;
- Figure 6 : une évolution de la température en façade d'un appareil de chauffage en fonction du temps, selon le mode de réalisation présenté à la figure 3.
- Figure 7 : une vue schématique de profil, en coupe, d'un appareil de chauffage selon un autre mode de réalisation que ceux présentés aux figures 1 et 3 ;
- Figure 8 : une évolution de la température en façade d'un appareil de chauffage en fonction du temps, selon le mode de réalisation présentés à la figure 6 ;
- Figure 9 : une vue schématique de profil, en coupe, d'un appareil de chauffage selon un mode de réalisation de l'invention, qui correspond à une variante du mode de réalisation présenté à la figure 6.

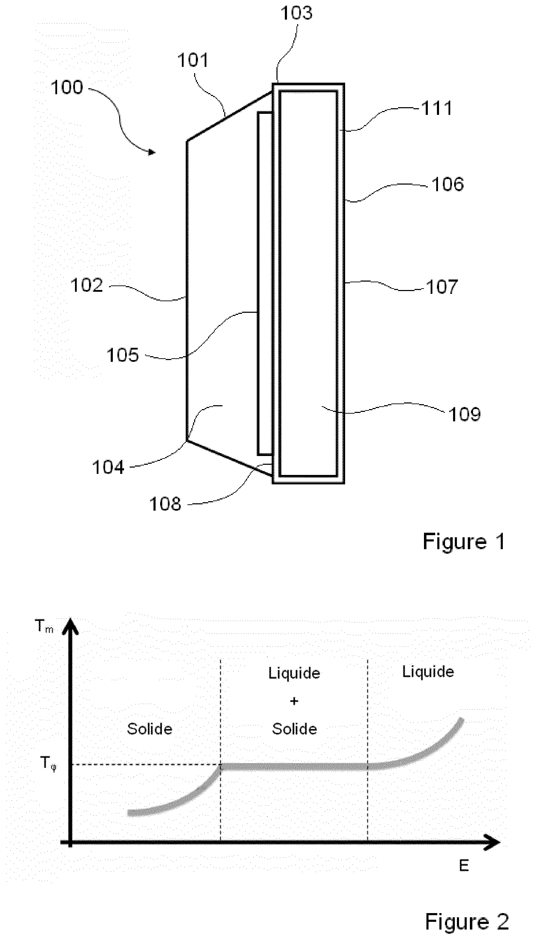

La figure 1 montre un appareil 100 de chauffage selon un premier mode de réalisation .

L'appareil 100 de chauffage comporte un bâti 101. Le bâti 101 comporte une face 102 arrière apte à être fixée à une paroi sensiblement verticale. Le bâti 101 comporte également une enveloppe 103. La face 102 arrière et l'enveloppe 103 délimitent ensemble un volume 104 interne du bâti 101 accueillant un élément 105 chauffant.

L'enveloppe 103 a une température Tₘₐₓ maximale autorisée. La température Tₘₐₓ maximale correspond à une température au-delà de laquelle l'appareil 100 présente un risque pour un utilisateur, notamment un risque de brûlure. La température Tₘₐₓ maximale est par exemple normalisée. La température Tₘₐₓ maximale est par exemple entrée dans une mémoire de données d'un dispositif de régulation (non représenté) de l'appareil 100.

Selon un mode de réalisation , l'élément 105 chauffant chauffe par convection l'air circulant à travers l'appareil 100. L'élément 105 chauffant est placé à proximité de la face 102 arrière du bâti 101. L'élément 105 chauffant est par exemple une résistance chauffante.

Dans l'exemple présenté à la figure 1, l'enveloppe 103 comporte un élément 106 rayonnant muni d'une façade 107 rayonnante. L'élément 106 rayonnant est chauffé par l'élément 105 chauffant. L'élément 105 chauffant est disposé de sorte à chauffer de manière sensiblement homogène l'élément 106 rayonnant.

Selon un mode de réalisation (non représenté), l'enveloppe 103 comporte plusieurs éléments 106 rayonnants chacun munis d'une façade 107 rayonnante et d'un élément 105 chauffant. Les éléments 106 rayonnants sont agencés de sorte que les façades 107 rayonnantes des éléments 106 rayonnants forment ensemble une façade de l'appareil 100.

L'enveloppe 103 comporte un matériau 109 à changement de phase. Le matériau 109 est par exemple de la paraffine, de l'alcool, du gel de silice, du sel fondu ou du sel hydraté. Dans l'exemple présenté à la figure 1, le matériau 109 à changement de phase est plus particulièrement disposé dans l'élément 106 rayonnant.

Le matériau 109 à changement de phase possède une température T_{ϕ} de changement de phase. Selon un mode de réalisation préféré de l'invention, la température T_{ϕ} de changement de phase correspond à un changement de phase solide/liquide - liquide/solide. Selon une variante, la température T_{ϕ} de changement de phase correspond à un changement de phase liquide/gaz - gaz/liquide.

L'évolution de la température Tₘ du matériau 109 à changement de phase au cours d'un changement de phase solide/liquide - liquide/solide, en fonction de l'énergie E qu'il reçoit, est décrite à la figure 2. Lorsque le matériau 109 est en phase solide, sa température Tₘ est inférieure à la température T_{ϕ} de changement de phase. Lorsque le matériau 109 est en phase solide, l'énergie E reçue par le matériau 109 entraîne une augmentation de sa température Tₘ. Lorsque la température Tₘ du matériau 109 atteint la température T_{ϕ} de changement de phase, le matériau 109 présente simultanément une phase solide et une phase liquide. Dès lors, l'énergie E supplémentaire que le matériau 109 reçoit est accumulée dans le matériau 109, sans que sa température Tₘ n'augmente. La température Tₘ du matériau 109 est stabilisée à la température T_{ϕ} de changement de phase. Puis, au-delà d'une certaine quantité d'énergie E reçue, le matériau 109 ne présente plus qu'une phase liquide et sa température Tₘ recommence à augmenter. L'évolution de la température Tₘ du matériau 109 à changement de phase au cours d'un changement de phase liquide/gaz - gaz/liquide, en fonction de l'énergie E qu'il reçoit, est similaire.

Dans l'exemple présenté à la figure 1, le matériau 109 est disposé à l'intérieur d'un conteneur 111 hermétique formant l'élément 106 rayonnant. Le conteneur 111 est par exemple en métal ou en plastique. Selon un autre exemple de réalisation, le conteneur comporte un matériau comprenant une structure alvéolaire. Selon une variante, le matériau 109 est imbibé dans un autre matériau solide poreux. Le matériau solide poreux est de préférence un matériau composite. Le matériau 109 imbibé dans le matériau composite est par exemple de la paraffine imbibée dans une céramique ou du sel fondu encapsulé dans des billes de polymère.

Dans l'exemple présenté à la figure 1, l'élément 105 chauffant est placé contre une face 108 arrière de l'élément 106 rayonnant. L'élément 105 chauffant est par exemple une résistance sérigraphiée sur un film plastique ou un câble chauffant. Selon une variante, l'élément 105 chauffant est noyé dans le matériau 109 à changement de phase à l'intérieur du conteneur 111.

Dans l'exemple présenté à la figure 1, le matériau 109 à changement de phase est choisi de sorte que sa température T_{ϕ} de changement de phase soit légèrement supérieure à la température Tₘₐₓ maximale de l'enveloppe 103. On entend par «légèrement supérieure» une différence entre la température T_{ϕ} de changement de phase et la température Tₘₐₓ maximale n'excédant pas 30°C.

De cette manière, si la température de l'enveloppe 103 dépasse la température Tₘₐₓ maximale autorisée jusqu'à atteindre la température T_{ϕ} de changement de phase du matériau 109, le matériau 109 opèrera un changement de phase, stabilisant ainsi pour un temps la température de l'enveloppe 103 à la température T_{ϕ} de changement de phase. En cas de surchauffe de l'appareil 100, l'augmentation de la température de l'enveloppe 103 sera donc retardée, et les risques pour l'utilisateur limités.

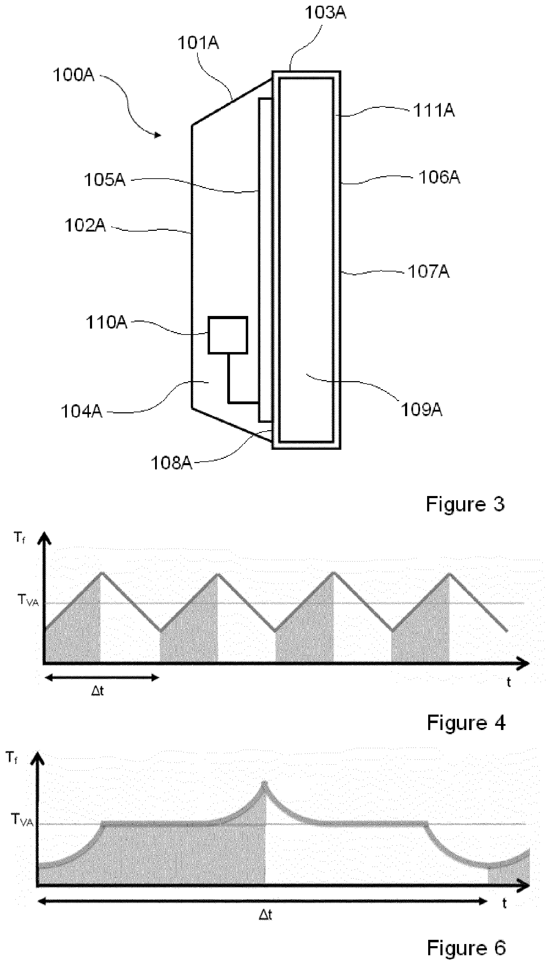

La figure 3 montre un appareil 100A de chauffage selon un deuxième mode de réalisation .

L'appareil 100A de chauffage comporte un bâti 101A. Le bâti 101A comporte une face 102A arrière apte à être fixée à une paroi sensiblement verticale. Le bâti 101A comporte également une enveloppe 103A. La face 102A arrière et l'enveloppe 103A délimitent ensemble un volume 104A interne du bâti 101A accueillant un élément 105A chauffant.

L'enveloppe 103A comporte un élément 106A rayonnant muni d'une façade 107A rayonnante. Selon un mode de réalisation, l'élément 106A rayonnant est recouvert d'une plaque en nids d'abeille disposée à distance de la façade 107A rayonnante. L'élément 106A rayonnant est chauffé par l'élément 105A chauffant. L'élément 105A chauffant est disposé de sorte à chauffer de manière sensiblement homogène l'élément 106A rayonnant.

Selon un mode de réalisation (non représenté), l'enveloppe 103A comporte plusieurs éléments 106A rayonnants chacun munis d'une façade 107A rayonnante et d'un élément 105A chauffant. Les éléments 106A rayonnants sont agencés de sorte que les façades 107A rayonnantes des éléments 106A rayonnants forment ensemble une façade de l'appareil 100A.

L'élément 105A chauffant est relié à un interrupteur 110A. De préférence, l'interrupteur 110A est un TRIAC, c'est-à-dire une triode pour courant alternatif. Le TRIAC 100A comporte une association de deux thyristors.

En fonctionnement, le TRIAC 110A s'ouvre et se ferme de manière cyclique. Lorsque le TRIAC 110A est fermé, l'élément 105A chauffant est alimenté en énergie électrique. Lorsque le TRIAC 110A est ouvert, l'élément 105A chauffant n'est pas alimenté en énergie électrique. Selon un mode de réalisation, les temps d'ouverture et de fermeture du TRIAC 110A sont égaux. Selon une variante, les temps d'ouverture et de fermeture du TRIAC 110A ne sont pas égaux.

Le TRIAC 110A est régulé par un dispositif de régulation (non représenté) de l'appareil 100A. Le dispositif de régulation comporte un microprocesseur, une mémoire de données, une mémoire de programmes et au moins un bus de communication. Le dispositif de régulation est relié par une interface d'entrée à une ou plusieurs sondes mesurant une température Tₚ de la pièce dans laquelle l'appareil 100A est installé. Le dispositif de régulation est également relié par l'interface d'entrée à une horloge électronique. Le dispositif de régulation est relié par une interface de sortie au TRIAC 110A.

Après que l'appareil 100A ait été mis en fonctionnement et que la température Tₚ de la pièce ait atteint une température T_{c} de consigne, le dispositif de régulation commande au TRIAC 110A de fonctionner, de sorte à maintenir la température Tₚ de la pièce à la température T_{c} de consigne. La température T_{c} de consigne est par exemple préenregistrée dans la mémoire de donnée du dispositif de régulation. Le TRIAC 110A s'ouvre alors et se ferme à un intervalle Δt de temps régulier. L'intervalle Δt de temps est par exemple préenregistré dans la mémoire de données du dispositif de régulation. L'intervalle Δt de temps est déterminé de sorte qu'une température Tf de la façade 107A rayonnante reste sensiblement constante malgré les cycles d'ouverture et de fermeture du TRIAC 100A.

La figure 4 montre l'évolution en fonction du temps t de la température Tf de la façade rayonnante d'un appareil de chauffage de l'art antérieur comprenant un TRIAC tel que précédemment décrit, lors d'une phase de maintien de la température Tₚ de la pièce chauffée à la température T_{c} de consigne. Les zones grisées en dessous de la courbe représentent le temps pendant lequel le TRIAC est fermé. L'intervalle de temps d'un cycle d'ouverture et de fermeture est court, de sorte que la température Tf de la façade rayonnante reste sensiblement constante. Cet intervalle de temps est par exemple compris entre 30 et 60s.

L'enveloppe 103A comporte un matériau 109A à changement de phase. Le matériau 109A est par exemple de la paraffine, de l'alcool, du gel de silice, du sel fondu ou du sel hydraté. Dans l'exemple présenté à la figure 3, le matériau 109A à changement de phase est plus précisément disposé dans l'élément 106A rayonnant.

Le matériau 109A de changement de phase possède une température T_{ϕA} de changement de phase. Selon un mode de réalisation préféré de l'invention, la température T_{ϕA} de changement de phase correspond à un changement de phase solide/liquide - liquide/solide. Selon une variante, la température T_{ϕA} de changement de phase correspond à un changement de phase liquide/gaz - gaz/liquide. Le matériau 109A de changement de phase a un comportement équivalent à celui représenté à la figure 2 et précédemment décrit.

Dans l'exemple présenté à la figure 3, le matériau 109A est disposé à l'intérieur d'un conteneur 111A hermétique formant l'élément 106 rayonnant. Le conteneur 111A est par exemple en métal ou en plastique. Selon un autre exemple de réalisation, le conteneur comporte un matériau comprenant une structure alvéolaire. Selon une variante, le matériau 109A est imbibé dans un autre matériau solide poreux. Le matériau solide poreux est de préférence un matériau composite. Le matériau 109A imbibé dans le matériau composite est par exemple de la paraffine imbibée dans une céramique ou du sel fondu encapsulé dans des billes de polymère.

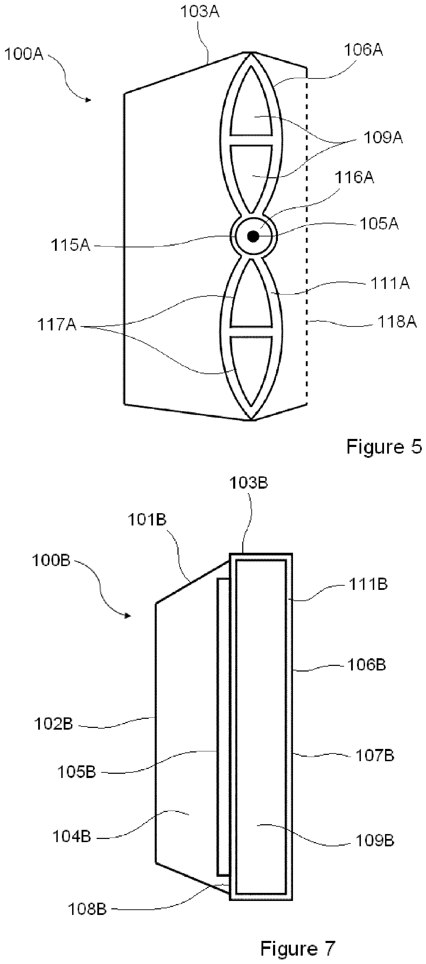

Dans l'exemple présenté à la figure 3, l'élément 105A chauffant est placé contre une face 108A arrière de l'élément 106A rayonnant. L'élément 105A chauffant est par exemple une résistance sérigraphiée sur un film plastique ou un câble chauffant. Selon une variante, l'élément 105A chauffant est noyé dans le matériau 109A à changement de phase à l'intérieur du conteneur 111A. Selon une autre variante présentée à la figure 5, l'élément 105A chauffant est un fil résistif, et le conteneur 111A comporte un compartiment 115A dans lequel est disposé le fil 105A résistif noyé dans de un matériau 116A isolant électrique et conducteur thermique, par exemple de la magnésie, et un ou plusieurs autres compartiments 117A dans lesquels est disposé le matériau 109A à changement de phase. L'utilisation d'une plaque 118A en nids d'abeille recouvrant l'élément 106A rayonnant est particulièrement adaptée à cette dernière variante.

Dans l'exemple présenté à la figure 3, le matériau 109A à changement de phase est choisi de sorte que sa température T_{ϕA} de changement de phase soit sensiblement égale à une température T_{vA} voulue de la façade 107A rayonnante. La température T_{vA} voulue est par exemple sensiblement égale à la température Tf de la façade 107A rayonnante, lorsque la température Tₚ de la pièce a atteint la température T_{c} de consigne.

De cette manière, à proximité de la température T_{VA} voulue, le matériau à changement de phase opère un changement de phase, et la montée ou la descente en température de la façade 107A rayonnante est ralentie. Le maintien de la façade 107A rayonnante à une température sensiblement constante peut alors être réalisé avec un intervalle Δt de temps augmenté par rapport à l'intervalle de temps de l'art antérieur représenté à la figure 4, permettant ainsi un actionnement moins fréquent du TRIAC 110A et donc un échauffement limité des thyristors. La figure 6 montre l'évolution en fonction du temps t de la température Tf de la façade 107A rayonnante de l'appareil 100A, lors d'une phase de maintien de la température Tₚ de la pièce chauffée à la température T_{c} de consigne. Les zones grisées en dessous de la courbe représentent le temps pendant lequel le TRIAC 110A est fermé. La figure 6 illustre la diminution de la fréquence des cycles d'ouverture et de fermeture du thyristor 110A permise grâce à l'utilisation du matériau 109A à changement de phase dans l'enveloppe 103A de l'appareil 100A, pour une variation de la température Tf de la façade 107A rayonnante autour de la température T_{vA} voulue identique à celle de la figure 4.

Le deuxième mode de réalisation peut avantageusement être combiné au premier mode de réalisation . L'élément 106A rayonnant comprend alors un deuxième matériau 109 à changement de phase dont la température T_{ϕ} de changement de phase est légèrement supérieure à une température Tₘₐₓ maximale autorisée de l'enveloppe 103A. Ainsi, l'appareil 110A présente à la fois les avantages liés à l'utilisation du matériau 109A à changement de phase, et les avantages liés à l'utilisation du matériau 109 à changement de phase.

La figure 7 montre un appareil 100B de chauffage selon un troisième mode de réalisation .

L'appareil 100B de chauffage comporte un bâti 101B. Le bâti 101B comporte une face 102B arrière apte à être fixée à une paroi sensiblement verticale. Le bâti 101B comporte également une enveloppe 103B. La face 102B arrière et l'enveloppe 103B délimitent ensemble un volume 104B interne du bâti 101B accueillant un élément 105B chauffant.

L'enveloppe 103B comporte un élément 106B rayonnant muni d'une façade 107B rayonnante. Selon un mode de réalisation, l'élément 106B rayonnant est recouvert d'une plaque en nids d'abeille disposée à distance de la façade 107B rayonnante. L'élément 106B rayonnant est chauffé par l'élément 105B chauffant. L'élément 105B chauffant est disposé de sorte à chauffer de manière sensiblement homogène l'élément 106B rayonnant.

Selon un mode de réalisation (non représenté), l'enveloppe 103B comporte plusieurs éléments 106B rayonnants chacun munis d'une façade 107 rayonnante et d'un élément 105 chauffant. Les éléments 106B rayonnants sont agencés de sorte que les façades 107B rayonnantes des éléments 106 rayonnants forment ensemble une façade de l'appareil 100B.

L'enveloppe 103B comporte un matériau 109B à changement de phase. Le matériau 109B est par exemple de la paraffine, de l'alcool, du gel de silice, du sel fondu ou du sel hydraté. Dans l'exemple présenté à la figure 7, le matériau 109B à changement de phase est plus précisément disposé dans l'élément 106B rayonnant.

Le matériau 109B de changement de phase possède une température T_{ϕB} de changement de phase. Selon un mode de réalisation préféré, la température T_{ϕB} de changement de phase correspond à un changement de phase solide/liquide - liquide/solide. Selon une variante, la température T_{ϕB} de changement de phase correspond à un changement de phase liquide/gaz - gaz/liquide. Le matériau 109B de changement de phase a un comportement équivalent à celui représenté à la figure 2 et précédemment décrit.

Les matériaux à changement de phase présentent en général une faible conductivité thermique. En d'autres termes, les matériaux à changement de phase transfèrent difficilement la chaleur. Les matériaux à changement de phase présentent en général une faible capacité thermique en phase pure (solide, liquide ou gazeuse), mais une forte capacité thermique lors d'un changement de phase (solide/liquide ou liquide/gaz). En d'autres termes, davantage d'énergie est nécessaire pour augmenter la température d'un matériau à changement de phase lors d'un changement de phase que pour augmenter celle d'un matériau à changement de phase en phase pure.

Dans l'exemple présenté à la figure 7, le matériau 109B est disposé à l'intérieur d'un conteneur 111B hermétique formant l'élément 106B rayonnant. Le conteneur 111B est par exemple en métal ou en plastique. Selon un autre exemple de réalisation, le conteneur comporte un matériau comprenant une structure alvéolaire. Selon une variante, le matériau 109B est imbibé dans un autre matériau solide poreux. Le matériau solide poreux est de préférence un matériau composite. Le matériau 109B imbibé dans le matériau composite est par exemple de la paraffine imbibée dans une céramique ou du sel fondu encapsulé dans des billes de polymère.

Dans l'exemple présenté à la figure 7, l'élément 105B chauffant est placé contre une face 108B arrière de l'élément 106B rayonnant. L'élément 105B chauffant est par exemple une résistance sérigraphiée sur un film plastique ou un câble chauffant. Selon une variante, l'élément 105B chauffant est noyé dans le matériau 109B à changement de phase à l'intérieur du conteneur 111B. Selon une autre variante, l'élément 105B chauffant est un fil résistif, et le conteneur 111B comporte un compartiment dans lequel est disposé le fil résistif noyé dans un matériau 116A isolant électrique et conducteur thermique, par exemple de la magnésie, et un ou plusieurs autres compartiments dans lesquels est disposé le matériau 109B à changement de phase. L'utilisation d'une plaque en nids d'abeille recouvrant l'élément 106B rayonnant est particulièrement adaptée à cette dernière variante. Cette variante est identique à celle présentée à la figure 5 pour le deuxième mode de réalisation.

Dans l'exemple présenté à la figure 7, le matériau 109B à changement de phase est choisi de sorte que sa température T_{ϕB} de changement de phase soit légèrement inférieure à une température T_{vB} voulue de la façade 107B rayonnante. La température T_{vB} voulue est par exemple sensiblement égale à la température Tf de la façade 107A rayonnante, lorsqu'une température Tₚ de la pièce dans laquelle l'appareil 100B est installé a atteint une température T_{c} de consigne. On entend par « légèrement inférieure » une différence entre la température T_{ϕB} de changement de phase et la température T_{vB} voulue n'excédant pas 70°C. La température T_{vB} voulue est par exemple entrée dans une mémoire de données d'un dispositif de régulation (non représenté) de l'appareil 100B.

De cette manière, l'appareil 100B de chauffage monte rapidement en température, et redescend lentement en température, améliorant ainsi le confort d'un utilisateur.

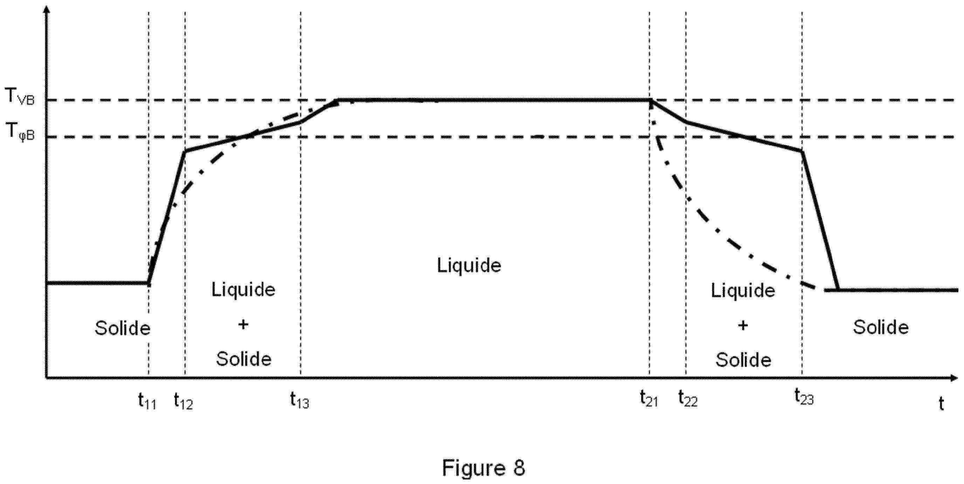

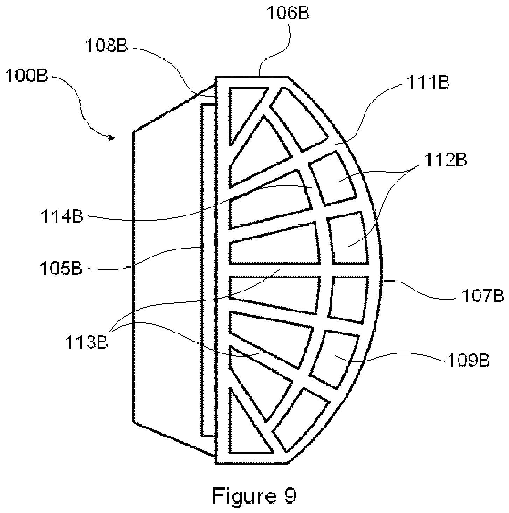

La figure 8 montre l'évolution de la température Tf de la façade 107B rayonnante de l'appareil 100B en fonction du temps t, lors d'une montée en température de l'appareil 100B suivie d'une descente en température de l'appareil 100B. La figure 9 montre également l'évolution de la température Tf de la façade rayonnante d'un appareil de l'art antérieur en fonction du temps t, au cours des mêmes étapes.

A un temps t₁₁, l'appareil 100B et l'appareil de l'art antérieur sont par exemple allumés.

La température Tf de la façade rayonnante de l'appareil de l'art antérieur augmente rapidement jusqu'à atteindre la température T_{vB} voulue, à laquelle elle se stabilise.

Lorsque l'appareil 100B est allumé, le matériau 109B à changement de phase contenu dans l'élément 106B rayonnant est à l'état solide. La température Tf de la façade 107B rayonnante de l'appareil 100B augmente rapidement jusqu'à une température légèrement inférieure à la température T_{ϕB} de changement de phase du matériau 109B, à un temps t₁₂. Au temps t₁₂, le matériau 109B est en changement de phase : il comporte à la fois une phase solide et une phase liquide. Au cours du changement de phase du matériau 109B, la température Tf de la façade 107B rayonnante progresse plus lentement jusqu'à atteindre une température légèrement supérieure à la température T_{ϕB} de changement de phase du matériau 109B, à un temps t₁₃. La température Tf de la façade 107B rayonnante progresse plus lentement lorsque le matériau 109B est en changement de phase, car le matériau 109B présente une faible capacité thermique en phase pure et une forte capacité thermique en changement de phase. Au temps t₁₃, le matériau 109B est à l'état liquide et la température Tf de la façade 107B rayonnante recommence à augmenter rapidement jusqu'à atteindre la température T_{vB} voulue, autour de laquelle elle se stabilise.

Ainsi, en choisissant une température T_{ϕB} de changement de phase du matériau 109B légèrement inférieure à la température T_{vB} voulue, la rapidité de la montée en température de la façade 107B rayonnante n'est que peu affectée. Le confort de l'utilisateur est donc assuré lors de la montée en température de l'appareil 100B.

A un temps t₂₁, l'appareil 100B et l'appareil de l'art antérieur sont par exemple éteints.

La température Tf de la façade rayonnante de l'appareil de l'art antérieur diminue rapidement jusqu'à atteindre la température ambiante, à laquelle elle se stabilise.

Lorsque l'appareil 100B est éteint, le matériau 109B à changement de phase contenu dans l'élément 106B rayonnant est toujours à l'état liquide. La température Tf de la façade 107B rayonnante de l'appareil 100B diminue rapidement jusqu'à une température légèrement supérieure à la température T_{ϕB} de changement de phase du matériau 109B, à un temps t₂₂. Au temps t₂₂, le matériau 109B est en changement de phase. Au cours du changement de phase du matériau 109B, la température Tf de la façade 107B rayonnante diminue plus lentement jusqu'à atteindre une température légèrement inférieure à la température T_{ϕB} de changement de phase du matériau 109B, à un temps t₂₃. Au temps t₂₃, le matériau 109B est à l'état solide et la température Tf de la façade 107B rayonnante recommence à diminuer rapidement jusqu'à atteindre la température ambiante, autour de laquelle elle se stabilise.

Ainsi, en choisissant une température T_{ϕB} de changement de phase du matériau 109B légèrement inférieure à la température T_{vB} voulue, la descente en température de la façade 107B rayonnante est ralentie par le changement de phase du matériau 109B qui reste pendant un temps à la température T_{ϕB} de changement de phase. Le confort de l'utilisateur est donc assuré, lors de la descente en température de l'appareil 100B.

La figure 9 montre l'appareil 100B selon une variante du mode de réalisation présenté à la figure 7. La variante illustrée à la figure 9 est également applicable au premier et au deuxième modes de réalisation de l'invention.

Dans l'exemple de réalisation de l'invention présenté à la figure 9, le conteneur 111B comporte plusieurs compartiments 112B remplis de matériau 109B à changement de phase. Le conteneur 111B est de préférence en aluminium. Les compartiments 112B sont ménagés de sorte à former au moins un canal 113B reliant la face 108B arrière de l'élément 106B rayonnant à la façade 107B rayonnante. Dans l'exemple, les compartiments 112B forment plusieurs canaux 113B. De préférence, les canaux 113B sont sensiblement plans et verticaux. Les canaux 113B permettent de faciliter le transport de chaleur de la face 108B arrière de l'élément 106B rayonnant, à la façade 107B rayonnante. Dans l'exemple présenté à la figure 9, les compartiments 112B sont également ménagés de sorte à former un canal 114B disposé sensiblement parallèlement à la façade 107B rayonnante.

Dans l'exemple présenté à la figure 9, la façade 107B rayonnante est bombée. La façade 107B rayonnante est bombée de bas en haut. Les termes « haut » et « bas » sont à entendre, lorsque l'appareil 100B est fixé à une paroi verticale. Les canaux 113B sont disposés en rayon depuis la face 108 arrière de l'élément 106B rayonnant vers la façade 107B rayonnante bombée. Selon une variante, la façade 107B rayonnante est concave de bas en haut. Selon une autre variante, la façade 107B rayonnante forme une ou plusieurs vagues.

Le troisième mode de réalisation peut avantageusement être combiné au premier mode de réalisation . L'élément 106B rayonnant comprend alors un deuxième matériau 109 à changement de phase dont la température T_{ϕ} de changement de phase est légèrement supérieure à une température Tₘₐₓ maximale autorisée de l'enveloppe 103B. Ainsi, l'appareil 110B présente à la fois les avantages liés à l'utilisation du matériau 109B à changement de phase, et les avantages liés à l'utilisation du deuxième matériau 109 à changement de phase.

Le troisième mode de réalisation peut avantageusement être combiné au deuxième mode de réalisation. L'élément 106B rayonnant comprend alors un deuxième matériau 109A à changement de phase dont la température T_{ϕA} de changement de phase est sensiblement égale à une température T_{vA} voulue de la façade 107B rayonnante. La température T_{vB} voulue de la façade 107B rayonnante peut être égale ou différente de la température T_{vA} voulue de la façade 107B rayonnante. Ainsi, l'appareil 110B présente à la fois les avantages liés à l'utilisation du matériau 109B à changement de phase, et les avantages liés à l'utilisation du deuxième matériau 109A à changement de phase.

Le troisième mode de réalisation peut avantageusement être combiné au premier et au deuxième mode de réalisation . L'élément 106B rayonnant comprend alors un deuxième matériau 109 à changement de phase dont la température T_{ϕ} de changement de phase est légèrement supérieure à une température Tₘₐₓ maximale autorisée de l'enveloppe 103B, et un troisième matériau 109A à changement de phase dont la température T_{ϕA} de changement de phase est sensiblement égale à une température T_{vA} voulue de la façade 107B rayonnante. La température T_{vB} voulue de la façade 107B rayonnante peut être égale ou différente de la température T_{vA} voulue de la façade 107B rayonnante. Ainsi, l'appareil 110B présente à la fois les avantages liés à l'utilisation du matériau 109B à changement de phase, les avantages liés à l'utilisation du deuxième matériau 109 à changement de phase, et les avantages liés à l'utilisation du troisième matériau 109A à changement de phase.

## Revendications

1. - Appareil (100B) de chauffage électrique comprenant :
- un bâti (101 B) comportant une enveloppe (103B) et une face (102B) arrière délimitant un volume (104B) interne du bâti, la face arrière étant apte à être fixée à une paroi sensiblement verticale,
- un élément (105B) chauffant disposé dans le volume interne du bâti ;
l'enveloppe comportant un élément (106B) rayonnant muni d'une façade (107B) rayonnante, chauffé par l'élément chauffant, un matériau à changement de phase étant disposé dans ledit élément rayonnant ;
l'appareil étant **caractérisé en ce que** :
- une température T_{ϕ} de changement de phase du matériau (109B) à changement de phase est légèrement inférieure à une température T_{VB} voulue de la façade (107B) rayonnante ; et
- l'élément rayonnant forme un conteneur (111B) hermétique comprenant plusieurs compartiments (112B) à l'intérieur desquels est disposé le matériau à changement de phase, les compartiments étant ménagés de sorte à former au moins un canal (113B) reliant une face (108B) arrière de l'élément rayonnant à la façade rayonnante.

2. Appareil selon la revendication 1, dans lequel l'élément (106A) rayonnant comporte un deuxième matériau (109) à changement de phase dont une température T_{ϕ} de changement de phase est légèrement supérieure à une température Tₘₐₓ maximale autorisée pour l'enveloppe (103A).

3. Appareil selon la revendication 1 ou la revendication 2, dans lequel l'élément (106B) rayonnant comporte un troisième matériau (109A) à changement de phase dont une température T_{ϕA} de changement de phase est sensiblement égale à une température T_{VA} voulue de la façade (107B) rayonnante.

4. Appareil selon l'une des revendications précédentes, dans lequel les compartiments (112B) sont ménagés de sorte à former au moins un canal (114B) disposé sensiblement parallèlement à la façade rayonnante.

## Patentansprüche

1. Vorrichtung (100B) zum elektrischen Heizen, aufweisend:
- ein Gehäuse (101 B), welches einen Mantel (103B) und eine Rückwand (102B) aufweist, die ein Innenvolumen (104B) des Gehäuses begrenzen, wobei die Rückwand angepasst ist, um an einer im Wesentlichen vertikalen Wand befestigt zu werden,
- ein Heizelement (105B), das in dem Innenvolumen des Gehäuses angeordnet ist,
wobei der Mantel ein Strahlelement (106B) aufweist, das mit einer Strahlfassade (107B) versehen und das von dem Heizelement b eheizt ist, wobei ein Phasenumwandlungsmaterial in dem Strahlelement angeordnet ist,
wobei die Vorrichtung **dadurch gekennzeichnet ist, dass**:
- eine Phasenumwandlungs-Temperatur T_{ϕ} des Phasenumwandlungsmaterials (109B) ein wenig kleiner ist als eine Wunschtemperatur T_{VB} für die Strahlfassade (107B), und
- das Strahlelement einen hermetischen Behälter (111B) bildet, der mehrere Fächer (112B) aufweist, in deren Inneren das Phasenumwandlungsmaterial angeordnet ist, wobei die Fächer konfiguriert sind, um wenigstens einen Kanal (113B) zu bilden, der eine Rückseite (108B) des Strahlelements mit der Strahlfassade verbindet.

2. Vorrichtung gemäß Anspruch 1, wobei das Strahlelement (106A) ein zweites Phasenumwandlungsmaterial (109) aufweist, dessen Phasenumwandlungs-Temperatur T_{ϕ} ein wenig größer ist als eine maximale Temperatur Tₘₐₓ, die für den Mantel erlaubt ist.

3. Vorrichtung gemäß Anspruch 1 oder Anspruch 2, wobei das Strahlelement (106B) ein drittes Phasenumwandlungsmaterial (109A) aufweist, dessen Phasenumwandlungs-Temperatur T_{ϕA} im Wesentlichen gleich einer Wunschtemperatur T_{VA} für die Strahlfassade (107B) ist.

4. Vorrichtung gemäß irgendeinem der vorigen Ansprüche, wobei die Fächer (112B) konfiguriert sind, um wenigstens einen Kanal (114B) bilden, der im Wesentlichen parallel zur Strahlfassade ist.

## Claims

1. An electrical heating appliance (100B) comprising:
- a frame (101B) comprising a casing (103B) and a rear face (102B) demarcating an internal volume (104B) of the frame, wherein the rear face is suitable for being secured to a wall that is substantially vertical,
- a heating element (105B) placed in the internal volume of the frame;
wherein the casing comprises a radiating element (106B) with a radiating front (107B), heated by the heating element, a phase-change material being placed in the radiating element;
the appliance being **characterized in that**:
- a phase-change temperature T_{ϕB} of the phase-change material (109B) is slightly lower than a required temperature TvB of the radiating front (107B) ; and
- the radiating element forms a sealed container (111B) comprising several compartments (112B), within which the phase-change material or materials are placed, wherein the compartments are arranged so as to form at least one channel (113B) connecting a rear face (108B) of the radiating element with the radiating front.

2. An appliance according to claim 1, wherein the radiating element (106A) comprises a second phase-change material (109) with a phase-change temperature T_{ϕ} that is slightly higher than a maximum temperature Tmax permitted for the casing (103A).

3. An appliance according to claim 1 or claim 2, wherein the radiating element (106B) comprises a third phase-change material (109A) with a phase-change temperature T_{ϕA} that is substantially equal to a required temperature TvA of the radiating front (107B).

4. An appliance according to any one of the previous claims, wherein the compartments (112B) are arranged so as to form at least one channel (114B) placed substantially parallel to the radiating front.
